# EUROPEAN PATENT APPLICATION

(11) **EP 4 343 337 A1**
(43) Date of publication of application: **27.03.2024**
(21) Application number: 22804301.4
(22) Date of filing: 02.03.2022
(51) Int. Cl.: G01N 35/04

(54) **CONTAINER DISPOSAL UNIT, AUTOMATIC ANALYSIS DEVICE COMPRISING SAME, AND METHOD FOR DISPOSING OF USED REACTION CONTAINER OF AUTOMATIC ANALYSIS DEVICE**

(30) Priority: 20.05.2021 JP 2021085520
(71) Applicant: HITACHI HIGH-TECH CORPORATION, Tokyo 105-6409 (JP)
(72) Inventor: SHIOTA, Yohei, Tokyo 105-6409 (JP); NODA, Kazuhiro, Tokyo 105-6409 (JP); YOKOYAMA, Koki, Tokyo 105-6409 (JP)
(74) Representative: Strehl Schübel-Hopf & Partner
(86) International application number: PCT/JP2022/008854
(87) International publication number: WO 2022/244380

(57) **Abstract**

[Problem]

To provide a container disposal unit that enables disposal of a reaction container without clogging and includes a disposal unit having a simple structure and a small dead space, an automatic analyzer having the container disposal unit, and a method for discarding a reaction container used in the automatic analyzer.

[Solution]

A reaction container disposal unit 201 includes a reaction container disposal hole 113 arranged on a back side of an automatic analyzer 101 to discard a used reaction container 116a, a disposal box 301 arranged on a front side of the automatic analyzer 101 to temporarily store the used reaction container 116a, and an inclined part configured to connect the container disposal hole 113 on the back side to an upper side of the disposal box 301 on the front side so as to introduce the reaction container 116a into the disposal box 301.

## Description

### Technical Field

The present invention relates to a container disposal unit suitable for an automatic analyzer, which performs qualitative or quantitative analysis of biological samples such as blood or urine, and an automatic analyzer including the container disposal unit, and a method for discarding a reaction container used in the automatic analyzer.

### Background Art

Patent literature 1 describes that a drive mechanism is provided below the bottom surface of a container, in which a disposal box is placed, so as to move the container in a back and forth direction being an opening and closing direction of a drawer; and a first rail, which extends in a movement direction of an operating part, and a second rail, which extends in the movement direction of the container provided in the drawer, and a toothed pulley are arranged such that the toothed pulley rotates a toothed belt within a horizontal plane, where the first rail, the second rail, and the toothed belt are arranged so as not to overlap each other in a vertical direction.

### Citation List

### Patent Literature

Patent literature 1: International Publication WO 2019/092949.

### Summary of Invention

### Technical Problem

The automatic analyzer is an apparatus that automatically analyzes blood and other biological samples and outputs analysis results, and is thus an essential apparatus in hospitals and medical testing facilities. Such an automatic analyzer has been recently required to perform a wider variety of tests in a shorter time.

In some automatic analyzer, a used reaction container, one of consumed goods, is put into a disposal box provided at a predetermined position from an analysis part, and when a certain numbers of reaction containers have accumulated, the reaction containers are taken out of the apparatus and discarded, and the empty disposal box is reset at a predetermined position within the apparatus.

In view of operator's replacement operation, when the disposal box is taken out or reset, since the disposal box is desirably located at the front of the apparatus to facilitate the operation, the disposal box is desirably disposed at the front of the apparatus or desirably configured to be movable toward the front of the apparatus. Examples of such a technique includes the technique described in the patent literature 1.

However, the configuration in which the disposal box is disposed at the front has the following limitations. For example, a disposal hole must be provided on the front side of the apparatus to dispose the disposal box at the front, which increases a travel distance of a mechanism to transport a used reaction container to the disposal hole, or causes the following layout constraint: The disposal hole must be disposed on the front side of the apparatus.

Furthermore, the configuration disclosed in the patent literature 1 needs to secure a space for bringing out a disposal box, which is placed on the rear side of the apparatus, to the front side of the apparatus, and the space inevitably becomes a dead space. Furthermore, it is necessary to mount the mechanism itself for moving the disposal box back and forth, and therefore further improvement is necessary to reduce size of the apparatus.

The invention provides a container disposal unit that allows a reaction container to be discarded without clogging and has a disposal unit with a simple structure and little dead space, an automatic analyzer including the container disposal unit, and a method for discarding a reaction container used in the automatic analyzer.

### Solution to Problem

The present invention includes a plurality of approaches to solve the problem as described above. In one example, a container disposal unit to discard a reaction container used in an automatic analyzer is characterized by including a container disposal hole disposed on a back side of the automatic analyzer and into which the used reaction container is discarded, a container disposal part disposed on the front side of the automatic analyzer and temporarily storing the used reaction container, and an inclined part configured to connect the container disposal hole on the back side to the upper part of the container disposal part on the front side and to introduce the reaction container to the container disposal part.

### Advantageous Effects of Invention

According to the invention, it is possible to discard a reaction container without clogging, and to achieve a disposal unit with a simple structure and little dead space. Other problems, configurations, and effects are clarified by the following description of embodiments.

### Brief Description of Drawings

FIG. 1 is a block diagram of an automatic analyzer according to a first embodiment of the invention.
FIG. 2 is a perspective view of the automatic analyzer of the first embodiment.
FIG. 3 is an exploded view of a disposal unit having a chute and a slope as a guide unit of the automatic analyzer of the first embodiment.
FIG. 4 is a perspective view of the disposal unit having the chute and the slope as the guide unit of the automatic analyzer of the first embodiment.
FIG. 5 is a cross-sectional view along A-A' of the disposal unit having the chute and the slope as the guide unit of the automatic analyzer of the first embodiment.
FIG. 6 is an exploded view of a disposal unit having a chute-integrated slope as a guide unit of an automatic analyzer according to a second embodiment of the invention.
FIG. 7 is a perspective view of the disposal unit having the chute-integrated slope as the guide unit of the automatic analyzer of the second embodiment.
FIG. 8 is a cross-sectional view along B-B' of the disposal unit having the chute-integrated slope as the guide unit of the automatic analyzer of the second embodiment.
FIG. 9 is an exploded view of a disposal unit having a chute-integrated slope with a circular section as a guide unit of an automatic analyzer according to a third embodiment of the invention.
FIG. 10 is a perspective view of the disposal unit having the chute-integrated slope with the circular section as the guide unit of the automatic analyzer of the third embodiment.
FIG. 11 is a cross-sectional view along C-C' of the disposal unit having the chute-integrated slope with the circular section as the guide unit of the automatic analyzer of the third embodiment.

### Description of Embodiments

Hereinafter, some embodiments of a container disposal unit of the invention, an automatic analyzer including the container disposal unit, and a method for discarding a reaction container used in the automatic analyzer will be described with reference to the drawings. In the drawings used in this description, the same or corresponding elements are designated by the same or similar signs, and duplicated description of them may be omitted.

### First Embodiment

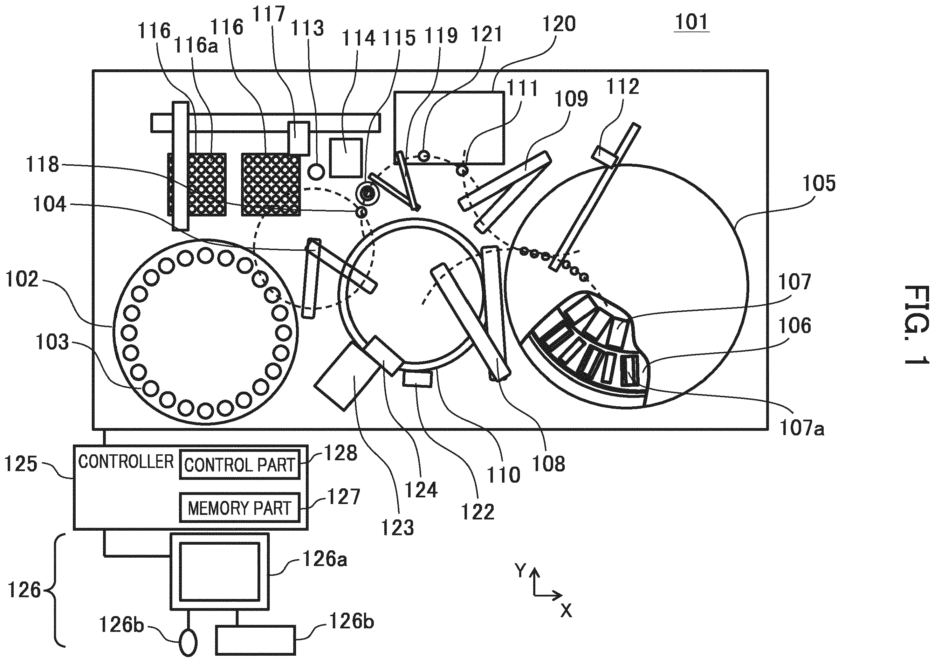

A first embodiment of the container disposal unit of the invention, the automatic analyzer including the container disposal unit, and the method for discarding a reaction container used in the automatic analyzer are now described with reference to Figs. 1 to 5.

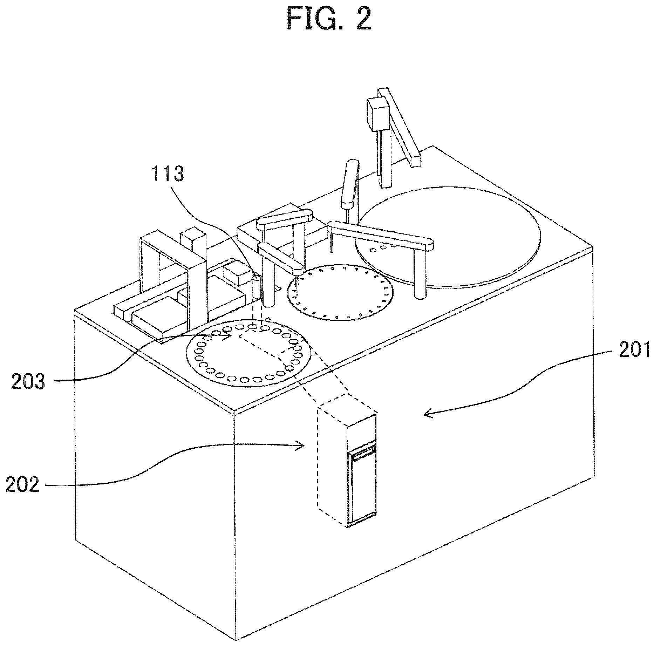

First, an overall structure of the automatic analyzer is described with reference to Figs. 1 and 2. Fig. 1 is an exemplary block diagram of the automatic analyzer of the invention. Fig. 2 is a perspective view of the automatic analyzer.

In Fig. 1, an automatic analyzer 101 is an apparatus analyzing a sample using a reagent corresponding to a predetermined analysis item, and includes a sample installation disk 102, a sample dispensing mechanism 104, a reagent storage 105, reagent dispensing mechanisms 108 and 109, an incubator disk 110, a magnetic particle stirring arm 112, a first reaction container transport unit 117, a reaction container disposal hole 113, an incubator block 114, a reaction liquid stirring unit 115, a reaction container tray 116, a second reaction container transport unit 119, an immunodetection unit 120, a stirring unit 122, a biochemical detection unit 123, a reaction cell cleaning mechanism 124, a reaction container disposal unit 201 (see Fig. 2), a controller 125, an operating part 126, and the like.

The sample installation disk 102 is structurally allowed to hold a plurality of sample containers 103 in a circular pattern. During sample dispensing, the sample installation disk 102 rotates to transport the sample container 103 to an access position of the sample dispensing mechanism 104.

In this embodiment, the sample installation disk 102 is disposed on the front side of the apparatus, and preferably has a configuration where a user itself installs a sample container 103 that houses a sample to be reacted in the reaction container 116a. In this description, "front side of the apparatus" refers to the negative side in the Y direction in Fig. 1.

The sample installation disk 102 can be configured such that two sample installation disks 102 can be used in a physically exchangeable manner. In operation, the two sample installation disks 102 can be exchanged alternately, and a sample can be added or changed halfway through a small window provided in the sample installation disk 102. However, the sample installation disk 102 need not necessarily has such a configuration where a user installs the sample container by itself, and may have a configuration where the sample container is transported using a transport mechanism or the like.

The sample dispensing mechanism 104 includes a rotational drive mechanism, a vertical drive mechanism, and a dispensing probe, and moves between a sample aspiration position and a sample discharge position by the rotational drive mechanism and the vertical drive mechanism and thus dispenses the sample.

The reagent storage 105, which is a mechanism for holding a plurality of reagent bottles (not shown) housing reagents to be reacted in the reaction container 116a, includes a reagent disk 106 and reagent bottle holding parts 107. The reagent storage 105 has a cold reserving function to enhance on-board stability of reagent properties. In this embodiment, the reagent disk 106 is also disposed on the front side of the apparatus.

The reagent bottle holding parts 107 are arranged in a double ring on the reagent disk 106, leading to a configuration where multiple reagent bottles can be held. The reagent disk 106 has a rotary drive mechanism and moves, by rotary motion, each reagent bottle to a predetermined position on the circumference.

The automatic analyzer 101 of this embodiment separately has the reagent dispensing mechanism 108 for biochemical analysis and the reagent dispensing mechanism 109 for immunoanalytical. The reagent dispensing mechanisms 108 and 109 have a common configuration including a rotary drive mechanism, a vertical drive mechanism, and a dispensing probe. The reagent dispensing mechanism 108 or 109 rotates to a position of a predetermined type of reagent bottle on the reagent disk 106, and lowers to aspirate a predetermined amount of the relevant reagent. After aspirating the reagent, the reagent dispensing mechanism 108 or 109 rises. Subsequently, the reagent dispensing mechanism 108 or 109 rotates and lowers to a reagent discharge destination, for example, a predetermined reaction cell on the incubator disk 110 for the reagent dispensing mechanism 108 for biochemical analysis, or the reaction container 116a for analysis of immunological items placed at a reagent discharge position 111 for the reagent dispensing mechanism 109 for immunological analysis, and discharges each reagent.

A magnetic particle stirring arm 112 (also referred to as a stirrer) is set as a stirring tool on the reagent disk 106. This magnetic particle stirring arm 112 moves to an upper region of the reagent bottle containing a magnetic particle solution to be stirred, lowers a magnetic particle stirring element of the magnetic particle stirring arm 112, and rotates the stirring element to stir the magnetic particle solution. To prevent spontaneous precipitation of magnetic particles in the solution, the magnetic particle stirring arm 112 stirs the magnetic particles immediately before the reagent is dispensed.

The immune analysis flow is now described in order of processing.

The first reaction container transport unit 117 has drive mechanisms in the X-axis, Y-axis and Z-axis directions and a reaction container gripping mechanism, and moves above the reaction container disposal hole 113, the incubator block 114, the reaction liquid stirring unit 115, and the reaction container tray 116.

A second reaction container transport unit 119 has a rotational drive mechanism, a vertical drive mechanism, and a reaction container gripping mechanism, and has a function of moving the reaction container 116a to the reaction liquid stirring unit 115 or each reaction container setting position, such as a sample discharge position 118, provided on the rotating orbit.

The first reaction container transport unit 117 moves the reaction container 116a from the reaction container tray 116 to the sample discharge position 118. The sample dispensing mechanism 104 dispenses a predetermined amount of a sample into the reaction container 116a placed at the sample discharge position. Subsequently, the reaction container 116a, into which the sample has been discharged, is moved to the reagent discharge position 111 by the second reaction container transport unit 119.

The reagent dispensing mechanism 109 dispenses a predetermined amount of a reagent into the reaction container 116a placed at the reagent discharge position 111. Subsequently, the reaction container 116a is moved by the second reaction container transport unit 119 to the reaction liquid stirring unit 115 in which the sample and the reagent are then stirred.

After stirring of the reaction liquid, the reaction container 116a is moved to the incubator block 114 by the first reaction container transport unit 117. The incubator block 114 is temperature-controlled to an appropriate temperature to promote the reaction of the sample and the reagent, and when the reaction process of the sample and the reagent on the incubator block 114 is completed, the reaction container 116a is moved to the sample discharge position 118 by the first reaction container transport unit 117.

Subsequently, the reaction container 116a is moved by the second reaction container transport unit 119 to the reaction liquid aspiration position 121 provided below the immunodetection unit 120 that analyzes immunological items of the sample. Subsequently, the reaction liquid is aspirated into a detection part within the immunodetection unit 120, and reaction signals are measured.

After the signal measurement, the reaction container 116a is moved by the second reaction container transport unit 119 to the sample discharge position 118, and is successively discarded by the first reaction container transport unit 117 into the reaction container disposal hole 113.

The reaction container disposal unit 201 is a container for accumulating reaction containers 116a used in the automatic analyzer 101, and is provided at a predetermined position in a space below the reaction container disposal hole 113 as shown in Fig. 2. The discarded reaction container 116a is guided by the guide unit 203 to a waste storage unit 202 at the front of the apparatus, and is accumulated in a disposal box 301 provided in the waste storage unit 202. The details will be described later.

The biochemical analysis flow is now described in order of processing.

The incubator disc 110 is a mechanism that holds the reaction liquid for analysis by the biochemical detection unit 123, and is temperature-controlled to an appropriate temperature in order to promote the reaction of the sample and the reagent as with the incubator block 114. In this embodiment, the incubator disc 110 is also disposed on the front side of the apparatus.

First, the sample dispensing mechanism 104 dispenses a predetermined amount of a sample into a predetermined reaction cell on the incubator disc 110. Subsequently, the incubator disc 110 rotates to move the reaction cell, into which the sample has been discharged, to an access position of the reagent dispensing mechanism 108 that then dispenses a predetermined amount of a reagent into that reaction cell.

The incubator disc 110 then rotates to move the reaction cell, into which the sample and the reagent have been discharged, to a set position of the stirring unit 122, and the sample and the reagent are then stirred by the stirring unit 122.

When a process of the reaction of the sample and the reagent on the incubator disc 110 is completed, the incubator disc 110 rotates to move the reaction cell containing the reaction liquid after completion of the reaction to a setting position of the biochemical detection unit 123 that analyzes biochemical items of the sample. The biochemical detection unit 123 is also disposed on the front side of the apparatus.

Subsequently, reaction signals are measured by a detection part within the biochemical detection unit 123. After measurement of the signals, the reaction liquid is exhausted from the reaction cell by a reaction cell cleaning mechanism 124.

The mechanism as described above in the automatic analyzer 101 is referred to as an analysis operating unit.

In addition to the analysis operating unit, the automatic analyzer 101 further includes the controller 125 that controls operation of each of devices, including the sample installation disk 102 and the sample dispensing mechanism 104, within the automatic analyzer 101, and includes an operating unit 126.

The controller 125 includes, for example, a hardware board and a computer, and incorporates a memory part 127 such as a hard drive and a control part 128.

The Storage unit 127 stores, for example, control parameters corresponding to the respective units and sample information on various samples.

The control part 128 may be configured in a form of hardware with a dedicated circuit board, or may be configured by software executed by the computer. When configured by hardware, the controller can be enabled by integrating a plurality of arithmetic units executing processing on a wiring board or in a semiconductor chip or a package. When configured by software, the controller can be enabled by installing a high-speed general-purpose CPU in the computer and running a program that executes desired arithmetic processing. It is also possible to upgrade an existing apparatus using a recording medium with such a program recorded. The apparatus, the circuit, and the computer are connected to one another via a wired or wireless network, and data is transmitted and received as appropriate.

The operating part 126 includes a display part 126a being a display, a mouse, and an input part 126b such as a keyboard. The display part 126a displays information stored in the memory part 127.

This is the configuration of the automatic analyzer 101 of this embodiment.

Although the configuration of the automatic analyzer has been described with a case of including both the immunodetection unit 120 and the biochemical detection unit 123 as shown in Fig. 1, the invention is not limitedly applied to such a configuration, but can be applied to automatic analyzers having other configurations, for example, an automatic analyzer including either the immunodetection unit or the biochemical detection unit, or an automatic analyzer that additionally or alternatively has a detection unit for another analysis item.

The automatic analyzer is not limited to a single-analysis-module configuration as shown in Fig. 1, but can have a configuration where at least two modules, such as an analysis module that can measure the same or different analysis items and a preprocessing module that performs preprocessing, are connected by a transport device.

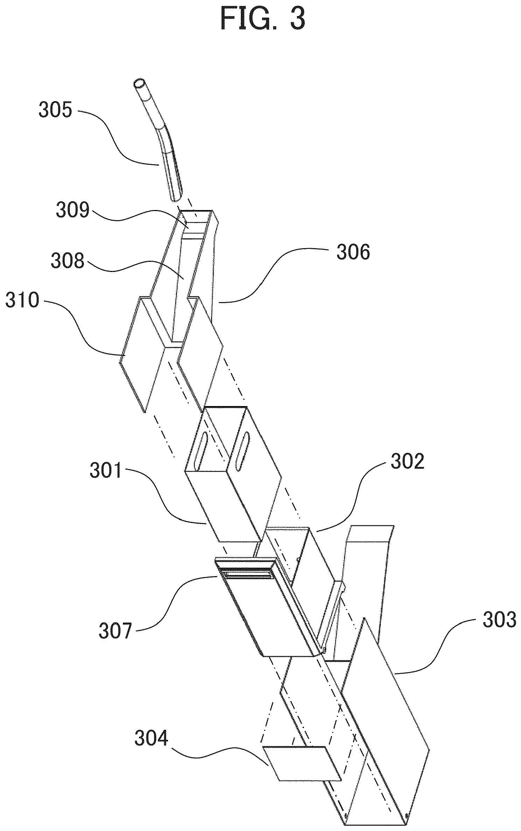

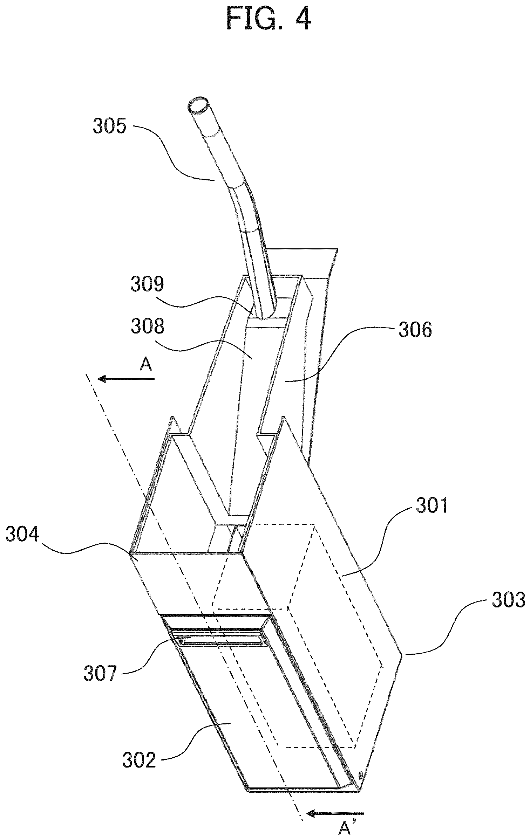

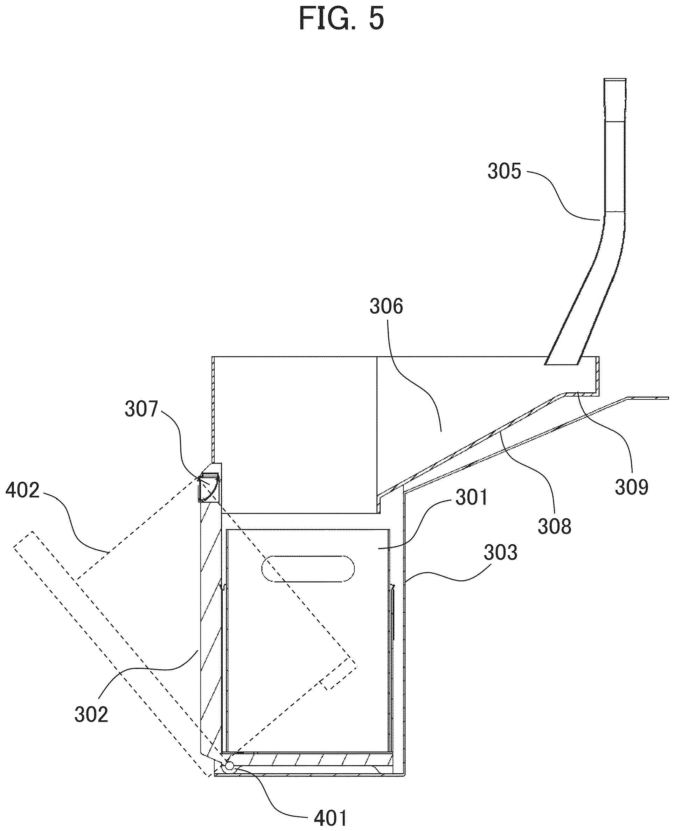

Details of the reaction container disposal unit 201 in the automatic analyzer 101 of this embodiment are now described with reference to Figs. 2 to 5 and subsequent drawings. Fig. 3 is an exploded view of the disposal unit, Fig. 4 is a perspective view of the disposal unit, and Fig. 5 is a cross-sectional view of the disposal unit.

As shown in Fig. 2, the reaction container disposal unit 201 includes the waste storage unit 202 that accumulates the reaction containers 116a and the guide unit 203 that guides the reaction container 116a to the waste storage unit 202.

In the automatic analyzer 101, a used reaction container 116a being a consumed article is put into the disposal box 301, which is provided at a predetermined position, through the reaction container disposal hole 113 disposed near the analysis part, and when a certain number of the reaction containers 116a have accumulated, the reaction containers are taken out of the apparatus and discarded, and the empty disposal box is reset at a predetermined position within the apparatus.

When the disposal box 301 is removed or reset, the disposal box 301 is highly necessary to be located in the front of the apparatus for operational convenience of an operator. The disposal box 301 is therefore desirably disposed at the front.

In the analyzer, the multiple units, such as the sample installation disk 102, the reagent disk 106, the dispensing mechanisms 104, 108, and 109, and optical systems (the biochemical detection unit 123 and the immunodetection unit 120), must be disposed within a limited space while considering influence on an operating range of each unit and on analysis.

As a result of optimization of such a layout, for example, as shown in Fig. 1, the sample installation disk 102, the reagent disk 106, the incubator disc 110, the biochemical detection unit 123, and the like, which are frequently accessed by users, are desired to be disposed preferentially on the near side, and thus a configuration of the disposal system of the used reaction container 116a is necessarily highly required to be disposed at the back of the apparatus.

In other words, due to balance with other mechanisms, the reaction container disposal hole 113 is also highly required to be disposed at the back, and thus the disposal box is difficult to be disposed at the front. In this case, as in the patent literature 1, the disposal box is disposed at the back, and a mechanism of bringing out the disposal box to the front is required to take out the disposal box. For this mechanism, however, a space, through which the disposal box passes during replacement of the disposal box, becomes a dead space, making it difficult to reduce size of the apparatus.

In this embodiment, therefore, the reaction container disposal unit 201 is designed such that, as shown in Fig. 3, the reaction container disposal hole 113, into which the used reaction container 116a is discarded, is disposed on the back side of the automatic analyzer 101, and the disposal box 301, which temporarily keeps a used reaction container 116a, is disposed on the front side of the automatic analyzer 101, and an inclined part, which is configured to connect the reaction container disposal hole 113 on the back side to the upper part of the disposal box 301 on the front side and to introduce the reaction container 116a to the disposal box 301, is provided.

As shown in Fig. 3, the inclined part preferably has a slope 306 with an inclined surface to introduce the reaction container 116a to the disposal box 301 and a chute 305 located above the slope 306 and passing the reaction container 116a therethrough to introduce the reaction container to the slope 306.

As shown in Fig. 3, the waste storage unit 202 includes the disposal box 301, a disposal box holder 302, a housing 303, and an observation window 304.

The disposal box holder 302 is connected onto the housing 303 via a hinge 401, and can be unfolded up to an extraction position 402 for extracting the disposal box 301 by manually pulling a handle 307 provided on the disposal box holder 302. Although this embodiment uses a rotational unfolding method with the hinge 401 as the central axis, a horizontally drawing unfolding method can also be used.

The disposal box 301 is set in the disposal box holder 302 assembled in the housing 303 disposed at the front of the apparatus, and can be extracted from the disposal box holder 302. The disposal box 301 is a substantially rectangular parallelepiped in shape with an open top, and is a bottomed paper cylinder lined with vinyl, for example. As an example, the disposal box 301 can be a vertically long box with a width of about 87 mm in the left-right direction, a depth of 157 mm in the front-back direction, and a height of 215 mm.

The observation window 304 prevents the reaction container 116a discarded from the reaction container disposal hole 113 from jumping out of the reaction container disposal unit 201, and allows visual check of a state of dirt on the surface of the slope 306. The observation window 304 is made of, for example, a transparent plastic plate, but it may also be made of a plate with many small holes, or may include a mesh structure such as a metal mesh.

As shown in Fig. 3, the guide unit 203 includes a slope 306 that guides the reaction container 116a to the disposal box 301 and a chute 305 that guides the reaction container 116a put into the reaction container disposal hole 113 to the slope 306. In the layout of the guide unit 203, the lower end of the slope 306 is located at the upper end of the disposal box 301, and the chute 305 is located directly below the reaction container disposal hole 113.

The chute 305 is a cylindrical member made of, for example, plastic and having a cross section that continuously changes from a circle to an oval along a curved trajectory, and is also a portion connecting the reaction container disposal hole 113 to the slope 306.

The chute 305 can have a cylindrical cross section including an elliptical cross section. As an example, a circular section with an outer diameter of 21 mm and a wall thickness of 1 mm runs 130 mm from top to bottom, followed by an oval cross section with a gradient of 66 degrees, which continues to a position 277 mm below the upper end of the chute 305 while continuously changing from the circular section to an oval cross section with a length of 30 mm and a width of 20 mm. In the course of changing into the slope of 66 degrees, the chute has an elbow shape having a radius of 150 mm.

The slope 306 is a member that decelerates the discarded reaction container 116a fallen from the reaction container disposal hole 113 via the chute 305 and guides the reaction container 116a to the disposal box 301, and includes an inclined surface 308 and a deceleration surface 309.

Adding the slope 306 to the reaction container disposal unit 201 makes it possible to reduce the dead space while disposing the disposal box 301 at the front. Reducing the dead space makes it possible to dispose one or more mechanisms of the unit, such as a pump and a degassing module, below the slope 306. This enables further reduction in size of the apparatus without affecting measurement results, user's maintenance operation, and the like.

The slope 306 is desirably configured to allow the reaction container 116a to roll on its surface and prevent the contents from bouncing, and is, for example, a plastic component including the inclined surface 308, the deceleration surface 309, and an enclosure 310.

The deceleration surface 309 is a member used to decelerate the reaction container 116a falling from the reaction container disposal hole 113, mainly a reaction container 116a that has bounced backward, and has a smaller gradient than the inclined surface 308. The deceleration surface 309 configures the connecting portion with the chute 305 of the slope 306, and is formed at the top of the inclined surface 308.

The inclined surface 308 is a flat surface with a constant inclination angle (1 to 89 degrees). Although the inclined surface 308 may be a flat surface with an inclination angle that varies with location or may be a flat surface with an inclination angle that does not vary, the inclined surface must have an inclination angle that allows connection between the deceleration surface 309 to be disposed on the back side of the apparatus and the disposal box 301 to be disposed on the front side of the apparatus. The cross section of the inclined surface 308 can be a semicircle, a semi-ellipse, or a V-shape, or can be formed as a surface that varies continuously along a curved trajectory of such a sectional shape.

The inclined surface 308 of the slope 306 can be subjected to surface processing so that the reaction liquid, which is the residue in the reaction container 116a, is less likely to adhere to the surface. As the surface processing, for example, emboss processing, water-repellent finishing, or hydrophilic finishing can be performed.

The enclosure 310 is a plate formed to cover side surfaces of spaces above the inclined surface 308, the deceleration surface 309, and the reaction container disposal unit 201.

As an example, the deceleration surface 309 is a flat surface with a depth of 29 mm and a width of 63 mm, and the inclined surface 308 is formed as a slope with a gradient of 29 degrees continuous from the deceleration surface 309 to a height 100 mm below the upper surface of the deceleration surface 309. The enclosure 310 is formed to cover the side surfaces of the spaces above the inclined surface 308, the deceleration surface 309, and the reaction container disposal unit 201 from a height of 35 mm above the deceleration surface 309. The enclosure 310 prevents the reaction container 116a from jumping out of the guide unit 203.

Each of the upper sides of the inclined surface 308 and the deceleration surface 309 may or may not be open. In other words, the enclosure 310 may exist only on the side surface side in the vertical direction as shown in Fig. 3 or the like without limitation. When the upper side is open, it is advantageously possible to reduce a possibility of clogging of the reaction container 116a. When the upper side is not open, it is advantageously possible to more securely suppress scattering of the contents of the reaction container 116a to the outside of the guide unit 203.

In the guide unit 203, the slope 306 is located at a position where the starting point of the inclined surface 308 is placed, for example, 27 mm downward and 6 mm forward from the lower end point of the chute 305. Such a placement can reduce an entry angle of the reaction container 116a to the slope 306 and thus suppresses bounce of the reaction container 116a on the slope 306.

Effects of this embodiment are now described.

The reaction container disposal unit 201 that discards the reaction container 116a used in the automatic analyzer 101 of the first embodiment of the invention includes the reaction container disposal hole 113 disposed on the back side of the automatic analyzer 101 and into which the used reaction container 116a is discarded, the disposal box 301 disposed on the front side of the automatic analyzer 101 and temporarily storing the used reaction container 116a, and the inclined part configured to connect the reaction container disposal hole 113 on the back side to the upper part of the disposal box 301 on the front side and to introduce the reaction container 116a to the disposal box 301.

This eliminates the need for the mechanism of bringing out to the front and the space for such movement, making it possible to allow a region directly below the inclined part to be a usable space in which another mechanism can be disposed, leading to the disposal unit having little dead space. Furthermore, since the disposal unit includes the inclined part, the reaction container 116a can be discarded without clogging, and a simple structure is provided. These are preferable for a small automatic analyzer with a simple structure.

The inclined part includes the slope 306 having the inclined surface for introducing the reaction container 116a to the disposal box 301, and the chute 305 located above the slope 306 and passing the reaction container 116a therethrough to introduce the reaction container to the slope 306, and thus can stably guide the reaction container 116a to the disposal box 301.

Furthermore, the inclined surface of the slope 306 is subjected to surface processing. The surface processing is in particular emboss processing, water-repellent finishing, or hydrophilic finishing, which makes it possible to further suppress remaining of the reaction liquid in the discarded reaction container 116a, and thus reduce wiping operation or the like by an operator, leading to a reduction in burden on the operator.

The observation window 304 is further provided to observe the state of the inclined part, and thus clogging of the reaction container 116a or a state of adhesion of dirt on the inclined part can be checked without drawing out the disposal box 301, making it possible to know easily whether cleaning of the inside or clogging elimination operation by an operator is necessary, leading to a reduction in burden on the operator.

Furthermore, a structure, in which a mechanism accessed frequently by an operator is disposed on the front side of the apparatus, can be provided by further providing the sample installation disk 102 that is disposed on the front side of the apparatus, holds a plurality of sample containers 103, each housing a sample to be reacted in the reaction container 116a, and is installed by a user itself, further providing the biochemical detection unit 123 analyzing biochemical items of a sample and the immunodetection unit 120 analyzing immunological items of the sample, where the reaction container 116a analyzes immunological items, further providing the incubator disk 110 disposed on the front side of the apparatus and holding the reaction liquid for analysis by the biochemical detection unit 123, where the biochemical detection unit 123 is disposed on the front side of the apparatus, and further providing the reagent disc 106 disposed on the front side of the apparatus, and holding a plurality of reagent bottles 107a, each housing a reagent to be reacted in the reaction container 116a.

### Second Embodiment

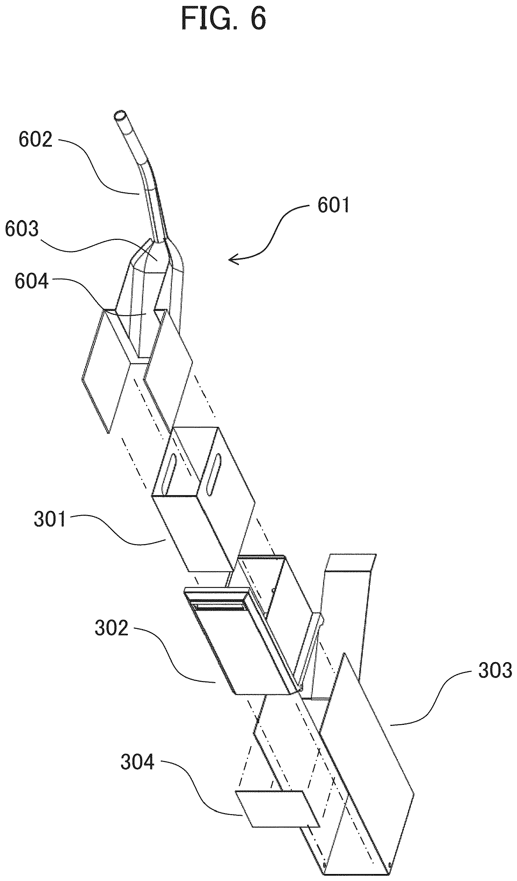

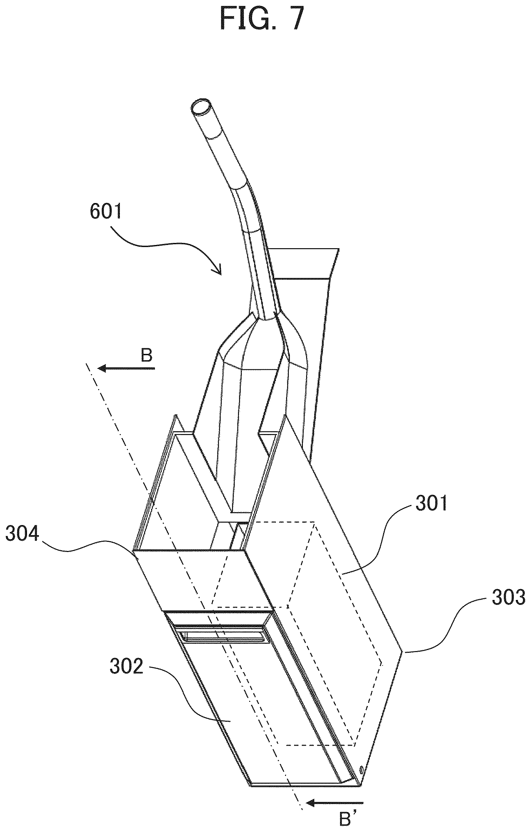

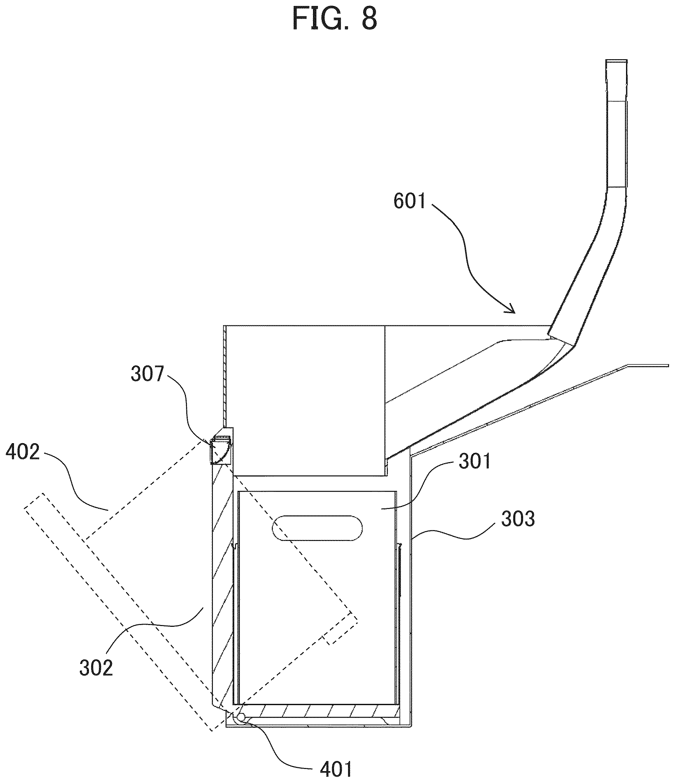

A container disposal unit of a second embodiment of the invention, an automatic analyzer including the container disposal unit, and a method for discarding a reaction container used in the automatic analyzer are now described with reference to Figs. 6 to 8. Fig. 6 is an exploded view of the disposal unit of the second embodiment, Fig. 7 is a perspective view of the disposal unit, and Fig. 8 is a cross-sectional view of the disposal unit.

As shown in Figs. 6 to 8, the second embodiment differs from the first embodiment in that the guide unit 203 is formed as a chute-integrated slope in which a slope part 604 and a chute part 602 are integrated in a continuous manner.

As shown in Figs. 6 to 8, the chute-integrated slope 601 includes the chute part 602, a spreading part 603, and the slope part 604. The chute part 602 has a shape similar to that of the chute 305.

The spreading part 603 is an inclined surface connecting the lower end of the chute part 602 and the upper end of the slope part 604, and having an open top unlike the chute part 602. The spreading part 603 can have a cross section that continuously changes from a semicircle to a flat surface along a curved trajectory. The spreading part 603 may have a V-shaped cross section in the middle. For example, the cross section is a curved surface that changes continuously from a semicircle with a diameter of 20 mm to a flat surface with a width of 63 mm along a trajectory of an arc with a radius of 95 mm. The arc is tangentially connected to the upper end of the slope part 604.

For the slope part 604, although a cross-sectional shape and an inclination angle can be made similar to those of the inclined surface 308 in the first embodiment, the upper end of the slope part 604 is connected to the spreading part 603 while the deceleration surface 309 is eliminated. The slope part 604 is a flat surface having a constant inclination angle of 1 to 89 degrees. The slope part 604 may be a flat surface with an inclination that varies with location or may be a curved surface, the cross section of which varies continuously along a curved trajectory to a semicircle, a semi-ellipse, or a V-shape. As an example, the slope part 604 is formed as a slope with a gradient of 29 degrees to a height 74 mm below the upper end of the slope part 604 as in the first embodiment.

As a method for reducing adhesion of the reaction liquid to the surfaces of the spreading part 603 and the slope part 604, surface processing can be performed as in the first embodiment. As the surface processing, for example, emboss processing, water-repellent finishing, or hydrophilic finishing can be performed.

Other configurations and operations are substantially the same as those of the container disposal unit of the first embodiment, the automatic analyzer including the container disposal unit, and the method for discarding the reaction container used in the automatic analyzer, and details of them are thus omitted.

The container disposal unit of the second embodiment of the invention, the automatic analyzer including the container disposal unit, and the method for discarding the reaction container used in the automatic analyzer also provide substantially the same effects as those of the container disposal unit of the first embodiment, the automatic analyzer including the container disposal unit, and the method for discarding the reaction container used in the automatic analyzer.

The chute part 602 and the slope part 604 are integrated in a continuous manner, making it possible to further suppress bounce of the reaction container 116a on the guide unit 203.

### Third Embodiment

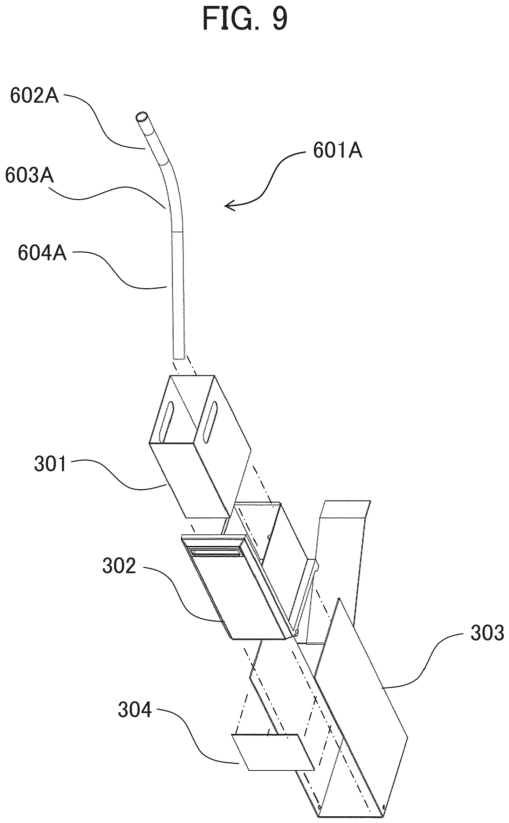

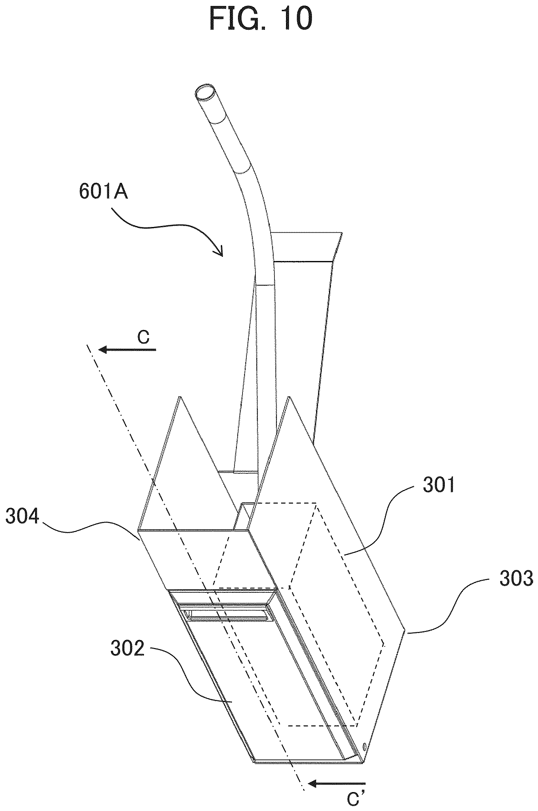

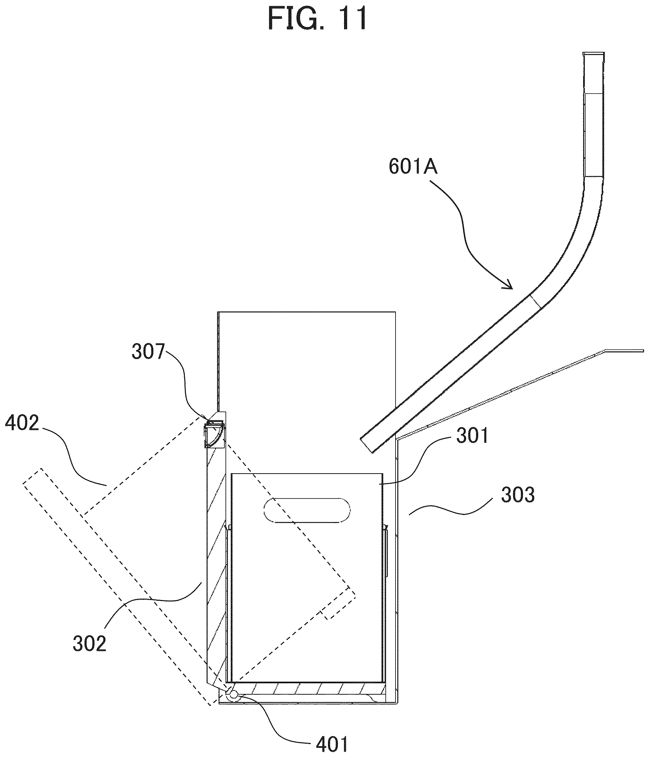

A container disposal unit of a third embodiment of the invention, an automatic analyzer including the container disposal unit, and a method for discarding a reaction container used in the automatic analyzer are now described with reference to Figs. 9 to 11. Fig. 9 is an exploded view of the disposal unit of the third embodiment, Fig. 10 is a perspective view of the disposal unit, and Fig. 11 is a cross-sectional view of the disposal unit.

As shown in Figs. 9 to 11, in the third embodiment, as in the second embodiment, the guide unit 203 is formed as a chute-integrated slope 601A in which a slope part 604A and a chute part 602A are integrated in a continuous manner.

The third embodiment differs from the second embodiment in that a spreading part 603A and the slope part 604A each have a cylindrical cross-sectional shape similar to that of the chute part 602A. Each of the cylindrical cross-sectional shapes of the spreading part 603A and the slope part 604A may be an oval or ellipse. The spreading part 603A and the slope part 604A are each made to have a closed cross-sectional shape, which advantageously suppresses irregular movement of the reaction container 116a within the guide unit 203.

Other configurations and operations are substantially the same as those of the container disposal unit of the first embodiment, the automatic analyzer including the container disposal unit, and the method for discarding the reaction container used in the automatic analyzer, and details of them are thus omitted.

The container disposal unit of the third embodiment of the invention, the automatic analyzer including the container disposal unit, and the method for discarding the reaction container used in the automatic analyzer also provide substantially the same effects as those of the container disposal unit of the first embodiment, the automatic analyzer including the container disposal unit, and the method for discarding the reaction container used in the automatic analyzer.

### Others

It should be noted that the present invention is not limited to the embodiments described above, and includes various modifications. The embodiments have been described in detail to simply describe the invention, and are not necessarily required to include all the described configurations.

Part of a configuration of one embodiment can be replaced with a configuration of another embodiment, and a configuration of one embodiment can be added to a configuration of another embodiment. In addition, part of a configuration of each embodiment can be subjected to addition, deletion, and replacement with respect to another configuration.

### List of Reference Signs

101 Automatic analyzer
102 Sample installation disc
103 Sample container
104 Sample dispensing mechanism
105 Reagent storage
106 Reagent disc
107 Reagent bottle holding part
107a Reagent bottle
108 Biochemical reagent dispensing mechanism
109 Immunoanalytical reagent dispensing mechanism
110 Incubator disc (reaction disc)
111 Reagent discharge position
112 Magnetic particle stirring arm
113 Reaction container disposal hole
114 Incubator block
115 Reaction liquid stirring unit
116 Reaction container tray
116a Reaction container
117 First reaction container transport unit
118 Sample discharge position
119 Second reaction container transport unit
120 Immunodetection unit
121 Reaction liquid aspiration position
122 Stirring unit
123 Biochemical detection unit
124 Reaction cell cleaning mechanism
125 Controller
126 Operating part
126a Display part
126b Input part
127 Memory part
128 Control part
201 Reaction container disposal unit (container disposal unit)
202 Waste storage unit
203 Guide unit
301 Disposal box (container disposal part)
302 Disposal box holder
303 Housing
304 Observation window
305 Chute
306 Slope
307 Handle
308 Inclined surface
309 Deceleration surface
310 Enclosure
401 Hinge
402 Extraction position
601, 601A Chute-integrated slope
602, 602A Chute part
603, 603A Spreading part
604, 604A Slope part

## Claims

1. A container disposal unit to discard a reaction container used in an automatic analyzer, comprising:
a container disposal hole arranged on a back side of the automatic analyzer to discard the used reaction container;
a container disposal part arranged on a front side of the automatic analyzer to temporarily store the used reaction container; and
an inclined part configured to connect the container disposal hole on the back side to an upper side of the container disposal part on the front side so as to introduce the reaction container into the container disposal part.

2. The container disposal unit according to claim 1,
wherein the inclined part includes:
a slope having an inclined surface to introduce the reaction container to the container disposal part; and
a chute located above the slope to introduce the reaction container to the slope through the chute.

3. The container disposal unit according to claim 2, wherein the inclined surface of the slope is a surface having been subjected to processing.

4. The container disposal unit according to claim 3, wherein the processing is one of processing operations of embossing, water repellent finish, and hydrophilic processing.

5. The container disposal unit according to claim 2, wherein the chute and the slope are continuous to each other to be of an integrated type.

6. The container disposal unit according to claim 1, further comprising an observation window to observe an aspect of the inclined part.

7. An automatic analyzer, comprising the container disposal unit according to claim 1.

8. The automatic analyzer according to claim 7, further comprising a sample installation disc arranged on an analyzer front side, holding a plurality of sample containers to contain samples to be reacted in the reaction container, and installed by a user.

9. The automatic analyzer according to claim 8, further comprising:
a biochemical detection unit used for measurement of a biochemical item of the sample; and
an immunodetection unit used for measurement of an immunodetection item of the sample,
wherein the reaction container is for analysis of the immunodetection item.

10. The automatic analyzer according to claim 9, further comprising a reaction disc arranged on the analyzer front side, and holding a reaction liquid for analysis by the biochemical detection unit.

11. The automatic analyzer according to claim 10, wherein the biochemical detection unit is arranged on the analyzer front side.

12. The automatic analyzer according to claim 8, further comprising a reagent disc arranged on the analyzer front side and holding a plurality of reagent containers to contain reagents to be reacted in the reaction container.

13. A method for discarding a reaction container used in an automatic analyzer, the automatic analyzer comprising:
a container disposal hole arranged on a back side of the automatic analyzer; and
a container disposal part arranged on a front side of the automatic analyzer to temporarily store the used reaction container,
wherein the used reaction container is discarded into the container disposal part via the container disposal hole and an inclined part configured to connect the container disposal hole on the back side to an upper side of the container disposal part on the front side so as to introduce the reaction container into the container disposal part.
